# EUROPEAN PATENT APPLICATION

(11) **EP 4 276 962 A1**
(43) Date of publication of application: **15.11.2023**
(21) Application number: 22919285.1
(22) Date of filing: 11.11.2022
(51) Int. Cl.: H01M 10/04

(54) **BATTERY WINDING METHOD AND APPARATUS**

(30) Priority: 18.03.2022 CN 202210270843
(71) Applicant: Battero Tech Corporation Limited, Shanghai 201400 (CN)
(72) Inventor: BAO, Ruiqi, Shanghai 201400 (CN); HUANG, Haining, Shanghai 201400 (CN)
(74) Representative: Bayramoglu et al.
(86) International application number: PCT/CN2022/131412
(87) International publication number: WO 2023/173771

(57) **Abstract**

A battery winding apparatus and method is provided. The battery winding method includes steps of providing a first sheet group comprising a cathode sheet, a second sheet group comprising an anode sheet, and a winding mechanism for a winding operation, where the first sheet group and/or the second sheet group are pre-formed with a separator or separators; and winding the first sheet group and the second sheet group by the winding mechanism to obtain a battery cell. The battery winding method forms the first sheet group and the second sheet group by pre-bonding the separator or separators to the cathode sheet and/or the anode sheet to solve the problem of wrinkling of the sheet or changing the core into the S-shaped and low winding efficiency in the prior art.

## Description

### TECHNICAL FIELD

The present invention relates to the technical field of battery winding, and in particular to a battery winding method and apparatus.

### BACKGROUND

The main structure of the current ion battery mainly includes an anode, a cathode, a separator, an electrolyte, a sealed outer packaging, etc. Within the battery, the anode and the cathode are separated by a non-conductive and porous separator, which plays the role of blocking electron transfer while providing ion channels. Thus, in the current production process of a battery cell, three material layers for a cathode sheet, an anode sheet, and a separator are firstly prepared, and then these three material layers are formed together by ways of winding or stacking.

During the winding, the cathode sheet, the anode sheet, and the separator shall be unwound separately, and then the three material layers shall be wound together on the winding needle. Finally, the battery cell shall be separated by a separator between the cathode sheet and the anode sheet, thus the cathode sheet cannot directly contact the anode sheet so as to block the electronic transmission between the anode and the cathode.

In the above process of winding, due to the sheet rolls for the three material layers separately fed and wound onto the winding needle, the battery cell obtained by the winding needs to strictly ensure that the cathode sheet, the anode sheet and the separator are relatively flush. Therefore, a certain tension should be applied to the material layer of each sheet roll to ensure that the material-layer line is straight, or otherwise the efficiency of winding can be easily affected. However, the separator is usually made by a polymer sheet, which is easy to deform after being pulled. When the battery cell is completed, the stress release and retraction of the separator and the anode or cathode sheet will occur during the the storage, the subsequent production process, and the use of the battery cell. However, the elastic modulus of the sheet and the elastic modulus of the separator are inconsistent, which eventually leads to the defects of a wrinkle of the sheet or an S-shaped core and etc. In addition, the anode sheet will expand during use, which will aggravate this phenomenon. The defects of the core and the sheet will affect the interface of the charging and discharging reactions of the battery cell, and the long-term use will gradually deteriorate and accelerate the attenuation of the battery cell performance.

### SUMMARY

The purpose of the present invention is to provide a battery winding method and apparatus, in which the method is used to solve the problems of the prior art in which the sheets are wrinkled or the cores become S-shaped and the winding efficiency is low.

In a first aspect, a battery winding method is provided in the present invention, in which the method includes the steps of providing a first sheet group comprising a cathode sheet, a second sheet group comprising an anode sheet, and a winding mechanism for a winding operation, wherein the first sheet group and/or the second sheet group are pre-formed with a separator or separators; winding the first sheet group and the second sheet group by the winding mechanism to obtain a battery cell with the cathode sheet and the anode sheet being alternatively stacked, wherein the separator or separators are provided between any adjacent cathode sheet and anode sheet in the battery cell.

The beneficial effect of the battery winding method of the present invention is that the separator or separators is pre-bonded to the cathode sheet and/or the anode sheet to form the first sheet group and the second sheet group, and then the first sheet group and the second sheet group are wound up, so that the separator and the cathode sheet or the anode sheet are pulled equally, in this way, the deformation of the separator is consistent with that of the cathode sheet or the anode sheet during the winding process so that the deformation of the sheet and the separator is equal when the subsequent stress release of the wound battery is retracted so that the sheet and the separator do not have wrinkles or the battery cell does not become S-shaped, ensuring the normal use and service life of the battery. In addition, the battery cell obtained by directly winding the first sheet group and the second sheet group is more direct and simple than the method of separately winding the cathode sheet, the anode sheet, and the separator, and is convenient to improve the winding efficiency of the battery cell.

In a possible implementation manner, the first sheet group and/or the second sheet group are pre-formed with a separator or separators specifically comprises: pre-bonding the separator or separators to the cathode sheet and/or the anode sheet to obtain the first sheet group and the second sheet group. The beneficial effect is that by pre-bonding the separator or separators to the cathode sheet or the anode sheet, thus it is possible to obtain the first sheet group and the second sheet group, facilitating the subsequent winding of the battery cell.

In a possible implementation manner, pre-bonding the separator or separators to the cathode sheet or the anode sheet specifically includes: pre-bonding the separator or separators to opposite sides of the cathode sheet or opposite sides of the anode sheet. The beneficial effect is that: by pre-bonding the separator onto opposite sides of the cathode sheet or the anode sheet, so that when the sheet is wound, there is at least a separator layer between any two adjacent layers (any adjacent cathode sheet and anode sheet), so that any two adjacent sides of the sheet can block electron transfer while providing ion channels through the separator or separators to ensure the normal operation of the battery.

In a possible implementation manner, pre-bonding the separator or separators to the cathode sheet and the anode sheet specifically includes: pre-bonding the respective separators to one side of the cathode sheet and one side of the anode sheet; and winding the first sheet group and the second sheet group by the winding mechanism specifically includes: winding the cathode sheet and the anode sheet bonded with the separators by the winding mechanism, wherein during the winding process, the sides of the cathode sheet and the anode sheet bonded with the separators are located close to or far from a winding axis of the winding mechanism. The beneficial effect is that: during the winding process, the separators of the cathode sheet and the anode sheet bonded with the separator respectively are arranged close to or far from the side of the winding axis of the winding mechanism, so that there is at least a layer of separator between any two adjacent sheets so that any two adjacent sides of the sheet can block electron transfer while providing ion channels by the separator to ensure the normal operation of the battery.

In a possible implementation manner, providing a wind-changing mechanism, and providing at least two winding mechanisms; winding the first sheet group and the second sheet group by the winding mechanism specifically includes: winding the first sheet group and the second sheet group by one of the winding mechanisms, where when the winding mechanism is wound up to a certain extent, the winding of the first sheet group and the second sheet group is switched to another winding mechanism for the winding operation through the wind-changing mechanism. The beneficial effect is that the switching between two or more winding mechanisms can be realized through the wind-changing mechanism, and the operating efficiency can be improved.

In a possible implementation manner, providing at least two guiding assemblies; and before winding the first sheet group and the second sheet group through the winding mechanism, the method further comprises: adjusting the travel direction of the first sheet group and the second sheet group by the two guiding assemblies. The beneficial effect is that at least two guiding assemblies are provided to guide the first sheet group and the second sheet group respectively, adjust the travel direction of the first sheet group and the second sheet group to the winding mechanism, and improve the smoothness of the movement of the sheet groups.

In a second aspect, the present invention provides a battery winding apparatus for winding batteries by the battery winding method described in any of the possible implementation manners of the first aspect above, the apparatus includes: a first unwinding mechanism, a second unwinding mechanism, and a winding mechanism; where the first unwinding mechanism is provided with the first sheet group and configured to unwind the first sheet group; the second unwinding mechanism is provided with the second sheet group and configured to unwind the second sheet group; one end of the first sheet group and one end of the second sheet group are coupled to the first winding mechanism, and the first winding mechanism is configured to wind the first sheet group and the second sheet group.

The beneficial effect of the battery winding apparatus of the present invention is that: the first unwinding mechanism and second unwinding mechanism are configured to unwind the first sheet group and the second sheet group respectively, and the first winding mechanism is configured to wind the first sheet group and the second sheet group to form the battery cells. In this way, when winding, the deformation of the separator and the sheet caused by pulling is equal, so that the sheet and the separator will not have wrinkles or the core will not become S-shaped and the like, and the winding efficiency is high.

In a possible implementation manner, at least two first guiding assemblies are further included, wherein the first sheet group and the second sheet group are coupled to the first winding mechanism via at least one of the first guiding assemblies respectively, and each of the first guiding assemblies is configured to adjust the travel direction of the first sheet group and the second sheet group. The beneficial effect is that the smoothness of the movement of the first sheet group and the second sheet group is enhanced by two or more of the first guiding assemblies guiding the first sheet group and the second sheet group, respectively.

In a possible implementation manner, a wind-changing mechanism is further included, where at least two first winding mechanisms are provided, and the wind-changing mechanism is configured to switch the first sheet group and the second sheet group from one of the first winding mechanisms to another of the first winding mechanisms for the winding operation. The beneficial effect is that by adjusting the winding position of the first sheet group and the second sheet group through the wind-changing mechanism, the winding can be adjusted to another first winding mechanism when the first sheet group and the second sheet group have been wound to a certain degree, which can improve operating efficiency.

In a possible implementation manner, a cathode unwinding mechanism, an anode unwinding mechanism, a separator unwinding mechanism, a second winding mechanism, and a bonding mechanism are further included; where the cathode unwinding mechanism is provided with an cathode sheet and configured to unwind the cathode sheet; the anode unwinding mechanism is provided with an anode sheet and configured to unwind the anode sheet; the separator unwinding mechanism is provided with a separator and configured to unwind the separator; the cathode sheet, the anode sheet, and the separator are coupled to the second winding mechanism via the bonding mechanism, and the bonding mechanism applies glue to at least one of the cathode sheet, the anode sheet, and the separator; the bonding mechanism is configured to bond the separator or separators onto the cathode sheet and/or the anode sheet; and the second winding mechanism is configured to wind the cathode sheet, the anode sheet, and the separator or separators to obtain the first sheet group and the second sheet group. The beneficial effect is to bond the separator or separators onto the cathode sheet and/or the anode sheet by applying glue so that the separator can be pre-bonded to the cathode sheet and/or the anode sheet.

In a possible implementation manner, a second guiding assembly is further included, where the cathode sheet and/or the anode sheet are coupled to the second guiding assembly via the bonding mechanism, and the second guiding mechanism is configured to adjust the travel direction of the cathode sheet and/or the anode sheet. The beneficial effect is that the second guiding assembly guides the bonded cathode sheet and/or the anode sheet, and the travel direction of the cathode sheet and/or the anode sheet can be adjusted.

### BRIEF DESCRIPTION OF THE DRAWINGS

FIG. 1 is a schematic diagram of the flow of a battery winding method in a first embodiment of the present invention;
FIG. 2 is a schematic diagram of the structure of a battery winding apparatus in a second embodiment of the present invention;
FIG. 3 is a schematic diagram of the structure of a first sheet group and a second sheet group in FIG. 2;
FIG. 4 is a schematic diagram of the structure of the first sheet group and the second sheet group in a third embodiment of the present invention;
FIG. 5 is a schematic diagram of the structure of the first sheet group and the second sheet group in a fourth embodiment of the present invention;
FIG. 6 is a schematic diagram of part of the structure of a cathode unwinding mechanism and a separator unwinding mechanism in FIG. 2;
FIG. 7 is a schematic diagram of part of the structure of an anode unwinding mechanism and a separator unwinding mechanism in FIG. 2; and
FIG. 8 is a schematic diagram of the structure of a battery winding apparatus in a fifth embodiment of the present invention.

Numerals:
1. Cathode unwinding mechanism;
2. Anode unwinding mechanism;
3. Separator unwinding mechanism;
4. Bonding mechanism;
5. First winding mechanism;
6. First guiding assembly;
7. Second guiding assembly;
8. Wind-changing mechanism;
9. Cathode sheet;
10. Anode sheet;
11. Separator;
12. First unwinding mechanism;
13. Second unwinding mechanism;
14. Second winding mechanism;
15. First sheet group; and
16. Second sheet group.

### DETAILED DESCRIPTION OF THE EMBODIMENTS

In order to make objectives, technical solutions, and advantages of the present invention clearer, the technical solutions in the present invention are described clearly and completely in the following with reference to accompanying drawings in the embodiments of the present invention. Apparently, the described embodiments are only part rather than all of the embodiments of the present invention. Based on the embodiments in the present invention, all other embodiments obtained without creative labor by a person of ordinary skill in the art fall within the scope of protection of the present invention. Unless otherwise mentioned, all technical and scientific terms used herein have the same meaning as commonly understood by one of ordinary skill in the art to which the present invention belongs. As used herein, the word "comprise" and similar words are intended to mean that the element or object appearing before the word covers the element or object appearing after the word listed and its equivalent, without excluding other elements or objects.

In response to the problems of the prior art, the embodiments of the present invention provide a battery winding method and apparatus.

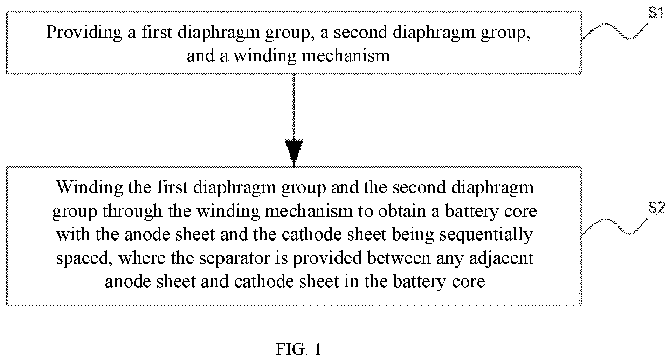

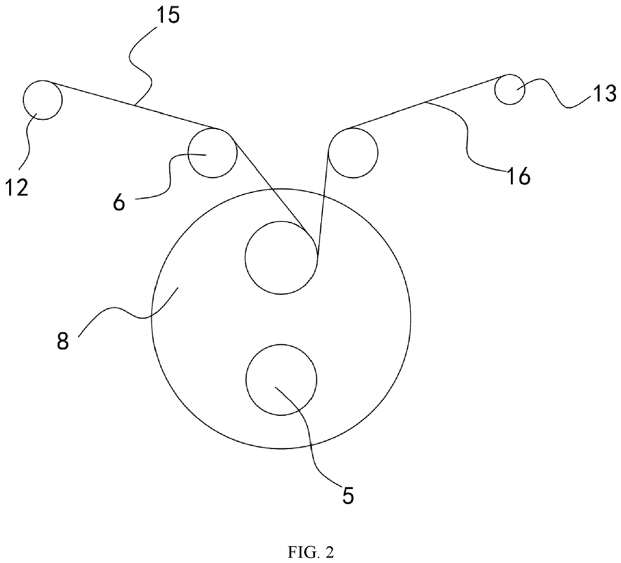

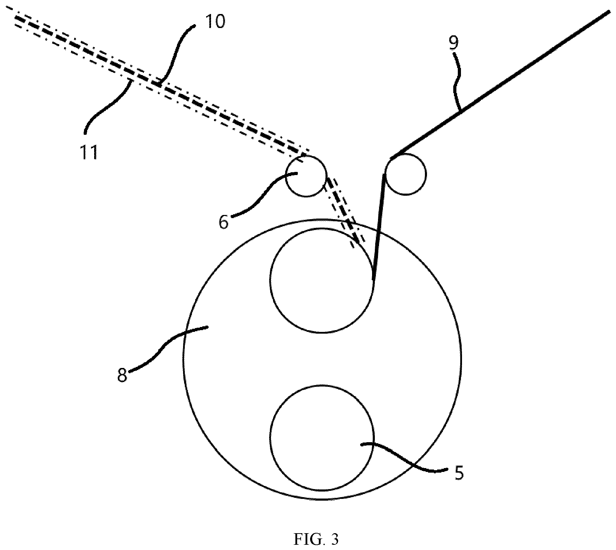

FIG. 1 is a schematic diagram of the flow of a battery winding method in a first embodiment of the present invention; FIG. 2 is a schematic diagram of the structure of a battery winding apparatus in a second embodiment of the present invention; FIG. 3 is a schematic diagram of the structure of a first sheet group and a second sheet group in FIG. 2;

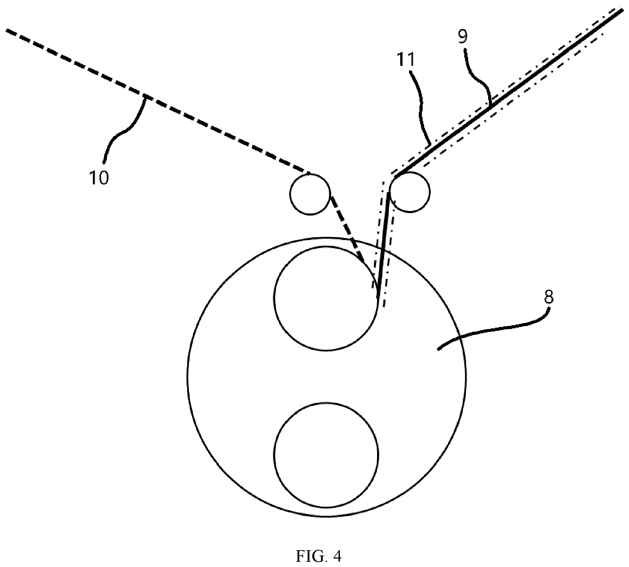

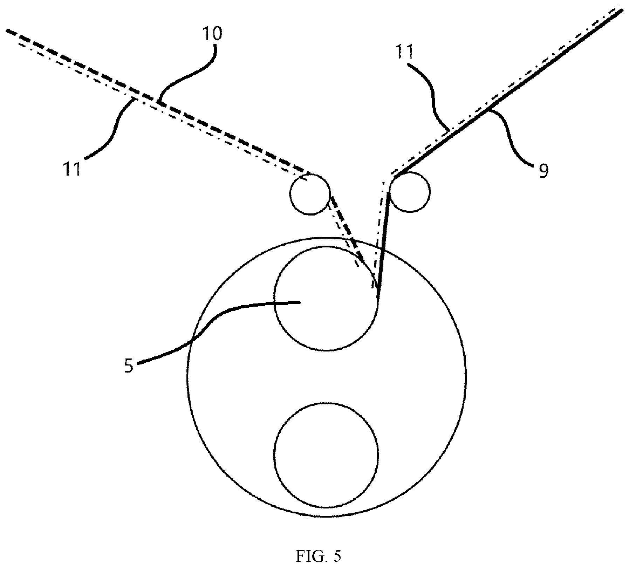

FIG. 4 is a schematic diagram of the structure of the first sheet group and the second sheet group in a third embodiment of the present invention; and FIG. 5 is a schematic diagram of the structure of the first sheet group and the second sheet group in a fourth embodiment of the present invention.

In some embodiments of the present invention, as shown in FIGS. 1 to 5, the battery winding method includes the steps of:
S 1 providing a first sheet group 15, a second sheet group 16 and a winding mechanism; and
S2, winding the first sheet group 15 and the second sheet group 16 by the winding mechanism to obtain a battery cell with the cathode sheet 9 and the anode sheet 10 being alternatively stacked, where the separator 11 or separators are provided between any adjacent cathode sheet 9 and anode sheet 10 in the battery cell. It should be noted the cathode sheet 9 or the anode sheet 10 is a whole sheet with no separator or separators deposited thereon.

In some specific embodiments of the present invention, the first sheet group 15 includes an cathode sheet 9, the second sheet group 16 includes a anode sheet 10, and the first sheet group 15 and/or the second sheet group 16 is pre-formed with a separator 11 or separators. The cathode sheet 9 usually refers to an electrode sheet, which contains active substance of the reduction reaction during discharging, with high potential, and the anode sheet 10 usually refers to an electrode sheet, which contains active substance of the reduction reaction during discharging, with low potential. The separator 11 is made of non-conductive material, and the separator 11 is provided with a porous structure that blocks electronic transmission and simultaneously provides an ion channel. The winding mechanism can be a motor-driven rotating shaft that provides the main power for winding the sheet and the separator 11. When in use, the separator 11 or separators are firstly pre-bonded to the cathode sheet 9 and/or the anode sheet 10 to obtain the first sheet group 15 and the second sheet group 16, and then the first sheet group 15 and the second sheet group 16 are wound by the winding mechanism to drive the sheet with the separator 11 in the sheet group to move synchronously, to prevent the sheet and separator 11 from being deformed inconsistently and avoid wrinkles.

In some embodiments, the winding mechanism is the first winding mechanism 5.

In some embodiments of the present invention, the first sheet group 15 and/or the second sheet group 16 are pre-formed with a separator 11 or separators specifically includes: pre-bonding the separator 11 or separators to the cathode sheet 9 and/ or the anode sheet 10 to obtain the first sheet group 15 and the second sheet group 16.

In some specific embodiments of the present invention, there are cases where the separator 11 or separators is pre-bonded to the cathode sheet 9 and/or the anode sheet 10 as follows: 1) pre-bonding the respective separators 11 to opposite sides of the cathode sheet 9; 2) pre-bonding the respective separators 11 to opposite sides of the anode sheet 10; 3) pre-bonding one separator layer to the cathode sheet 9 and one separator layer to the anode sheet 10.

In some embodiments, the separators 11 are set in two or more layers, i.e., at least one separator layer is provided between any two adjacent sheets of the wound core.

In some other embodiments, the separator 11, which is provided on opposite sides of the cathode sheet 9 or the anode sheet 10, is arranged as a one-piece structure. In some embodiments, the one-piece separator 11 is folded during boding so that the one-piece separator 11 is boded onto opposite sides of the cathode sheet 9 or the anode sheet 10, also enabling at least one separator layer 11 to be re-formed between any two adjacent sheets of the wound core.

In some embodiments of the present invention, as shown in FIGS. 1 to 3, pre-bonding the separator 11 or separators to the cathode sheet 9 or the anode sheet 10 specifically includes: pre-bonding the separator 11 or separators to opposite sides of the cathode sheet 9 or opposite sides of the anode sheet 10.

In some specific embodiments of the present invention, the separator 11 or separators are pre-bonded to opposite sides of the cathode sheet 9, and the opposite sides of the anode sheet 10 are not pre-bonded with the separator 11 or separators.

In some other embodiments of the present invention, the separator 11 or separators is pre-bonded to opposite sides of the anode sheet 10, and the opposite sides of the cathode sheet 9 are not pre-bonded with the separator 11 or separators.

In some other embodiments, the separator 11 or separators are pre-bonded to opposite sides of the cathode sheet 9, while the separator 11 or separators may also be pre-bonded to opposite sides of the anode sheet 10, i.e. the case where there are two separator layers exist between any two adjacent sheets.

In some embodiments of the present invention, as shown in FIGS. 1 to 3, pre-bonding the separator 11 or separators to the cathode sheet 9 and the anode sheet 10 specifically includes: pre-bonding the respective separators 11 to one side of the cathode sheet 9 and one side of the anode sheet 10; and winding the first sheet group 15 and the second sheet group 16 by the winding mechanism specifically includes: winding the cathode sheet 9 and the anode sheet 10 bonded with the separators 11 by the winding mechanism, where during the winding process, the sides of the cathode sheet 9 and the anode sheet 10 bonded with the separators 11 are located close to or far from a winding axis of the winding mechanism.

In some specific embodiments of the present invention, at least one separator layer is pre-formed on one side of the cathode sheet 9 and at least one separator layer is pre-formed on one side of the anode sheet 10, so that the separator 11 of the first sheet group 15 and the separator 11 of the second sheet group 16 are always located on the side close to or far from the winding axis of the winding mechanism when winding, and a separator 11 is set between any two adjacent sheets. In some embodiments, during the winding process, the separator 11 on the cathode sheet 9 is located on a side close to the anode sheet 10, and the separator 11 on the anode sheet 10 is located on a side away from the cathode sheet 9. Alternatively, during the winding process, the separator 11 on the cathode sheet 9 is located on a side away from the anode sheet 10 and the separator 11 on the anode sheet 10 is located on a side close to the cathode sheet 9.

In some embodiments of the present invention, as shown in FIGS. 1 to 3, a wind-changing mechanism 8 is provided, and at least two winding mechanisms are provided. The step of winding the first sheet group 15 and the second sheet group 16 by the winding mechanism specifically includes: winding the first sheet group 15 and the second sheet group 16 by one of the winding mechanisms, when the winding mechanism is wound up to a certain extent, winding of the first sheet group 15 and the second sheet group 16 is switched to another winding mechanism for winding through the wind-changing mechanism 8.

In some specific embodiments of the present invention, two winding mechanisms are provided, and the wind-changing mechanism 8 is provided. When in use, the first sheet group 15 and the second sheet group 16 are wound up by one winding mechanism. When wound up to a certain extent, the winding positions of the first sheet group 15 and the second sheet group 16 are adjusted by the wind-changing mechanism 8. And after that, the winding can be carried out by another winding mechanism, which can continue the winding, reduce the interval time and improve the operating efficiency.

It is worth mentioning that, in order to facilitate the switching of the winding position, a shear mechanism (not shown in the figure) is also provided. When the wind-changing mechanism 8 switches the winding positions of the first sheet group 15 and the second sheet group 16, the shear mechanism is used to cut the sheet groups coupled between the two winding mechanisms, facilitating the disassembly of the core, and also able to prepare for the subsequent switching of the winding position.

In some embodiments of the present invention, as shown in FIGS. 1 to 3, at least two guiding assemblies are provided; and before winding the first sheet group 15 and the second sheet group 16 by the winding mechanism, the method further includes: adjusting the travel direction of the first sheet group 15 and the second sheet group 16 by the two guiding assemblies.

In some specific embodiments of the present invention, the guiding assembly is the first guiding assembly 6, the first sheet group 15 and the second sheet group 16 are coupled to the winding mechanism via at least one first guiding assembly 6, that is, at least one first guiding assembly 6 is provided on the movement line of the first sheet group 15 or between the first sheet group 15 and the winding mechanism to adjust the travel direction, and the second sheet group 16 is provided with at least one first guiding assembly 6 to adjust the travel direction in the same way as the first sheet group 15.

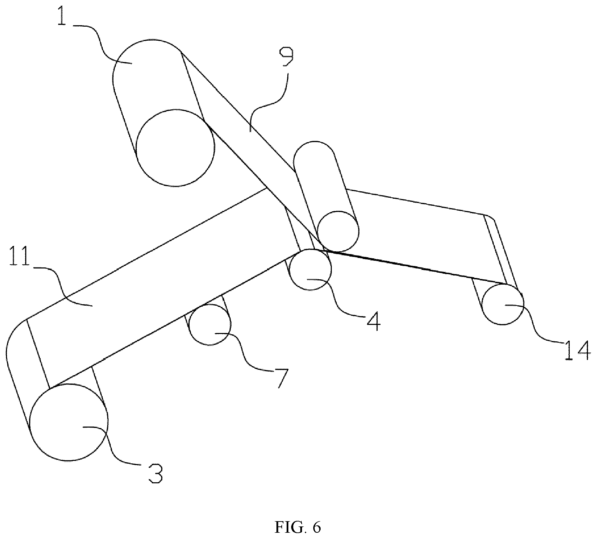

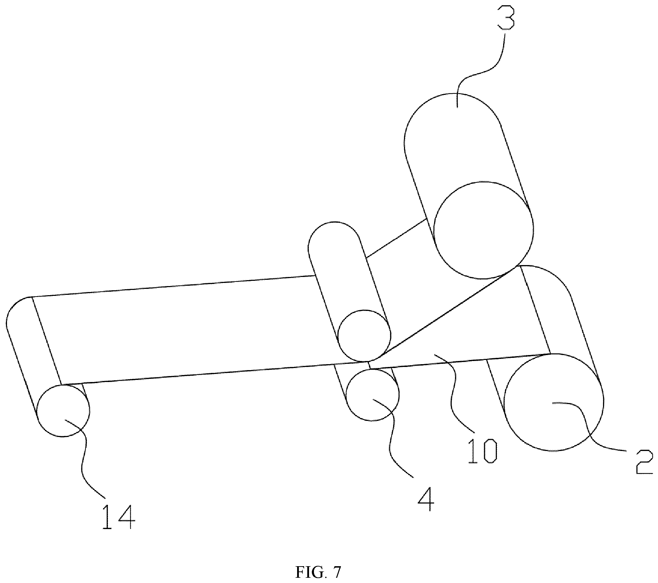

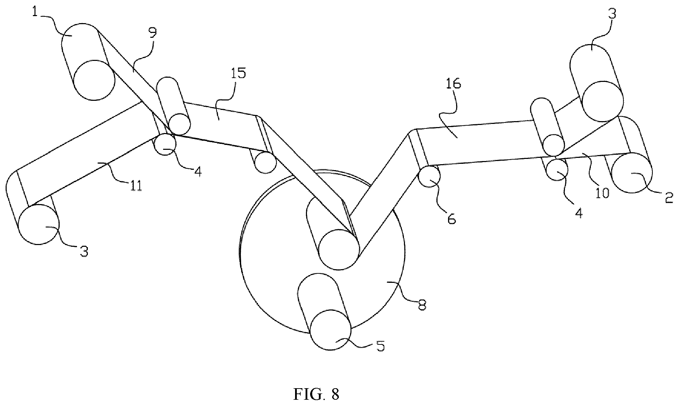

FIG. 6 is a schematic diagram of part of the structure of a cathode unwinding mechanism and a separator unwinding mechanism in FIG. 2; FIG. 7 is a schematic diagram of part of the structure of an anode unwinding mechanism and a separator unwinding mechanism in FIG. 2; and FIG. 8 is a schematic diagram of the structure of a battery winding apparatus in a fifth embodiment of the present invention.

In some embodiments of the present invention, as shown in FIGS. 2 to 8, the battery winding apparatus performs battery winding by ways of the battery winding method in any one of above embodiments, including: a first unwinding mechanism 12, a second unwinding mechanism 13, and a winding mechanism 5; wherein the first unwinding mechanism 12 is provided with the first sheet group 15 and configured to unwind the first sheet group 15; the second unwinding mechanism 13 is provided with the second sheet group 16 and configured to unwind the second sheet group 16; one end of the first sheet group 15 and one end of the second sheet group 16 are coupled to the first winding mechanism 5, and the first winding mechanism 5 is configured to wind the first sheet group 15 and the second sheet group 16.

In some specific embodiments of the present invention, the first unwinding mechanism 12, the second unwinding mechanism 13 and the first winding mechanism 5 are set to be rotating rolls driven by a motor or motors, the first sheet group 15 is coupled to the rotating roll of the first unwinding mechanism 12, and the second sheet group 16 is coupled to the rotating roll of the second unwinding mechanism 13. The motor can drive the rotating roller to rotate, to unwind the wound materials of the first sheet group 15 and the second sheet group 16. The first winding mechanism 5 is configured to wind the first sheet group 15 and the second sheet group 16 to obtain the battery cell.

In some embodiments of the present invention, as shown in FIG. 2, at least two first guiding assemblies 6 are further included; the first sheet group 15 and the second sheet group 16 are coupled to the first winding mechanism 5 via at least one of the first guiding assemblies 6 respectively, and the first guiding assembly 6 is configured to adjust the travel direction of the cathode sheet 9 and the anode sheet 10.

In some specific embodiments of the present invention, the first guiding assembly 6 is a driven roller, a side wall of the first sheet group 15 is set tangent to a side wall of the first guiding assembly 6, then the first sheet group 15 is coupled to the first winding mechanism; a side wall of the second sheet group 16 is set tangent to a side wall of the other first guiding assembly 6, and then the second sheet group 16 is coupled to the first winding assembly. The first guiding assembly 6 can be provided to adjust the travel direction of the first sheet group 15 and the second sheet group 16, which is convenient for the layout of various mechanisms of the apparatus and saving the space.

In some embodiments, two or more of the first guiding assemblies 6 that are tangential to the first sheet group 15 can be provided.

In some embodiments of the present invention, as shown in FIGS. 2 to 4, a wind-changing mechanism 8 is further included, where there are at least two first winding mechanisms 5, and the wind-changing mechanism 8 is configured to switch the first sheet group 15 and the second sheet group 16 from one of the first winding mechanisms 5 to another of the first winding mechanisms 5 for winding.

In some specific embodiments of the present invention, two or more of the first winding mechanisms 5 are provided, and the wind-changing mechanism 8 is provided, so that the winding position of the first sheet group 15 and the second sheet group 16 can be switched to other first winding mechanisms 5 through the wind-changing mechanism 8 after the winding operation of the first winding mechanism 5 is completed, and the winding operation can continue.

In some embodiments of the present invention, as shown in FIGS. 2 to 8, a cathode unwinding mechanism 1, an anode unwinding mechanism 2, a separator unwinding mechanism 3, a second winding mechanism 14, and a bonding mechanism 4 are further included; where the cathode unwinding mechanism 1 is provided with an cathode sheet 9 and configured to unwind the cathode sheet 9; the anode unwinding mechanism 2 is provided with an anode sheet 10 and configured to unwind the anode sheet 10; the separator unwinding mechanism 3 is provided with a separator 11 and configured to unwind the separator 11; the cathode sheet 9, the anode sheet 10, and the separator 11 are coupled to the second winding mechanism 14 via the bonding mechanism 4, and the bonding mechanism 4 applies glue to at least one of the cathode sheet 9, the anode sheet 10, and the separator 11; the bonding mechanism 4 is configured to bond the separator 11 or separators on the cathode sheet 9 and/or the anode sheet 10; and the second winding mechanism 14 is configured to wind the cathode sheet 9, the anode sheet 10, and the separator 11 or separators to pre-obtain the first sheet group 15 and the second sheet group 16.

In some specific embodiments of the present invention, the cathode unwinding mechanism 1, the anode unwinding mechanism 2 and the separator unwinding mechanism 3 have the same structure as the first unwinding mechanism 12. The cathode sheet 9 is arranged on the rotating roll of the cathode unwinding mechanism 1, the anode sheet 10 is arranged on the rotating roll of the anode unwinding mechanism 2, and the separator 11 is arranged on the rotating roll of the separator unwinding mechanism 3. The rotating roll can be driven to rotate by the action of the motor to unwind the cathode sheet 9, the anode sheet 10 and the separator 11. The bonding mechanism 4 is configured to pre-bond the separator 11 or separators on the cathode sheet 9 and/or the anode sheet 10.

In some embodiments, the bonding mechanism 4 applies glue to at least one of the cathode sheet 9, the anode sheet 10, and the separator 11; the bonding mechanism 4 is configured to bond the separator 11 or separators to opposite sides of the cathode sheet 9 or opposite sides of the anode sheet 10. Alternatively, the bonding mechanism 4 is configured to bond the separator 11 to one side of the cathode sheet 9 and bond the separator 11 to one side of the anode sheet 11.

In some specific embodiments of the present invention, the bonding mechanism 4 applies glue to opposite sides of the cathode sheet 9 and opposite sides of the anode sheet 10, after which the separator 11 is pressed onto opposite sides of the cathode sheet 9 and/or the anode sheet 10, completing the bonding of the separator 11 to the cathode sheet 9 and/or the anode sheet 10.

In some other embodiments, the bonding mechanism 4 may also apply glue on the separator 11.

It should be noted that in practice the first sheet group 15 and the second sheet group 16 can be directly bonded before winding.

In addition, in some embodiments, the cathode sheet 9 and/or the anode sheet 10 can also be directly pre-bonded to the separator 11 in actual use, and then directly coupled to the first winding mechanism 5 for winding the electric core without the action of the second winding mechanism 14.

In some embodiments of the present invention, as shown in FIGS. 2 and 6, a second guiding assembly 7 is further included, where the cathode sheet 9 and/or the anode sheet 10 are coupled to the second guiding assembly 7 via the bonding mechanism 4, and the second guiding mechanism 7 is configured to adjust the travel direction of the cathode sheet 9 and/or the anode sheet 10.

In some specific embodiments of the present invention, the second guiding assembly 7 has the same structure as the first guiding assembly 6. When in use, the separator mechanism 4 applies glue on the cathode sheet 9 and/or the anode sheet 10, or applies glue on the separator 11, and then presses the cathode sheet 9 and the separator 11, or presses the anode sheet 10 and the separator 11 to complete the bonding between the cathode sheet 9 and/or the anode sheet 10 and the separator 11, thereby obtaining the first sheet group 15 and the second sheet group 16. Prior to this, the travel direction of the cathode sheet 9 and/or the anode sheet 10 can be adjusted by using the second guiding assembly 7.

While the embodiments of the present invention have been described in detail, it will be apparent to those skilled in the art that various modifications and changes can be made to the embodiments. However, it is to be understood that such modifications and variations are within the scope and spirit of the present invention as described in the appended claims. Furthermore, the present invention described herein is susceptible to other embodiments and may be embodied or carried out in various ways.

## Claims

1. A battery winding method, comprising steps of:
providing a first sheet group comprising a cathode sheet, a second sheet group comprising an anode sheet, and a winding mechanism for a winding operation, wherein the first sheet group and/or the second sheet group are pre-formed with a separator or separators; and
winding the first sheet group and the second sheet group by the winding mechanism to obtain a battery cell with the cathode sheet and the anode sheet being alternatively stacked, wherein the separator or separators are provided between any adjacent cathode sheet and anode sheet in the battery cell.

2. The battery winding method according to claim 1, wherein the first sheet group and/or the second sheet group are pre-formed with the separator or separators by a step of:
pre-bonding the separator or separators to the cathode sheet and/or the anode sheet to obtain the first sheet group and the second sheet group.

3. The battery winding method according to claim 2, wherein the step of pre-bonding the separator or separators to the cathode sheet or the anode sheet comprises:
pre-bonding the separator or separators to opposite sides of the cathode sheet or opposite sides of the anode sheet.

4. The battery winding method according to claim 2, wherein the step of pre-bonding the separator or separators to the cathode sheet and the anode sheet comprises:
pre-bonding the separators to a side of the cathode sheet and a side of the anode sheet, respectively; and
the step of winding the first sheet group and the second sheet group by the winding mechanism comprises:
winding the cathode sheet and the anode sheet bonded with the separators by the winding mechanism, wherein during a winding process, the side of the cathode sheet and the side of the anode sheet bonded with the separators are located adjacent to or far from a winding axis of the winding mechanism.

5. The battery winding method according to claim 1, further comprising: providing a wind-changing mechanism, and providing at least two winding mechanisms;
wherein the step of winding the first sheet group and the second sheet group by the winding mechanism comprises:
winding the first sheet group and the second sheet group by one of the at least two winding mechanisms, wherein when the winding mechanism is wound up to a certain extent, the winding of the first sheet group and the second sheet group is switched to another winding mechanism for the winding operation through the wind-changing mechanism.

6. The battery winding method according to claim 1, further comprising: providing at least two guiding assemblies; and
before winding the first sheet group and the second sheet group by the winding mechanism, the battery winding method further comprises: adjusting a travel direction of the first sheet group and the second sheet group by the at least two guiding assemblies.

7. A battery winding apparatus for winding a battery with the battery winding method according to claim 1, comprising: a first unwinding mechanism, a second unwinding mechanism, and a first winding mechanism; wherein
the first unwinding mechanism is provided with the first sheet group and configured to unwind the first sheet group;
the second unwinding mechanism is provided with the second sheet group and configured to unwind the second sheet group; and
one end of the first sheet group and one end of the second sheet group are coupled to the first winding mechanism, and the first winding mechanism is configured to wind the first sheet group and the second sheet group.

8. The battery winding apparatus according to claim 7, further comprising at least two first guiding assemblies; wherein
the first sheet group and the second sheet group are coupled to the first winding mechanism via at least one of the at least two first guiding assemblies respectively, and each of the at least two first guiding assemblies is configured to adjust a travel direction of the first sheet group and the second sheet group.

9. The battery winding apparatus according to claim 7, further comprising a wind-changing mechanism, wherein
at least two first winding mechanisms are provided, and the wind-changing mechanism is configured to switch the first sheet group and the second sheet group from one of the at least two first winding mechanisms to another of the at least two first winding mechanisms for the winding operation.

10. The battery winding apparatus according to claim 7, further comprising a cathode unwinding mechanism, an anode unwinding mechanism, a separator unwinding mechanism, a second winding mechanism, and a bonding mechanism; wherein
the cathode unwinding mechanism is provided with the cathode sheet and configured to unwind the cathode sheet;
the anode unwinding mechanism is provided with the anode sheet and configured to unwind the anode sheet;
the separator unwinding mechanism is provided with the separator and configured to unwind the separator;
the cathode sheet, the anode sheet and the separator are coupled to the second winding mechanism via the bonding mechanism, and the bonding mechanism applies glue to at least one of the cathode sheet, the anode sheet and the separator;
the bonding mechanism is configured to bond the separator or separators onto the cathode sheet and/or the anode sheet; and
the second winding mechanism is configured to wind the cathode sheet, the anode sheet and the separator or separators to obtain the first sheet group and the second sheet group.

11. The battery apparatus according to claim 10, further comprising a second guiding assembly, wherein
the cathode sheet and/or the anode sheet are coupled to the second guiding assembly via the bonding mechanism, and the second guiding mechanism is configured to adjust a travel direction of the cathode sheet and/or the anode sheet.
